# EUROPÄISCHE PATENTSCHRIFT

(11) **EP 1 061 018 B1**
(45) Veröffentlichungstag und Bekanntmachung des Hinweises auf die Patenterteilung: **23.07.2003**
(21) Anmeldenummer: 00111328.1
(22) Anmeldetag: 26.05.2000
(51) Int. Cl.: B65G 47/51, B65G 47/08

(54) **Vorrichtung zur Handhabung von Planschnittprodukten**
Device for handling blanks
Dispositif de manutention de produits en feuilles

(30) Priorität: 08.06.1999 DE 19926073
(43) Veröffentlichungstag der Anmeldung: 20.12.2000
(73) Patentinhaber: Adolf Mohr Maschinenfabrik GmbH & Co. KG, 65719 Hofheim am Taunus (DE)
(72) Erfinder: Meyer, Gerhard, 86356 Neusäss (DE)
(74) Vertreter: Quermann, Helmut, Dipl.-Ing.

(56) Entgegenhaltungen:
- US-A- 4 610 347
- US-A- 5 267 821

## Beschreibung

Die Erfindung betrifft eine Vorrichtung zur Handhabung von Planschnittprodukten, insbesondere einen Puffer, der zwischen einer Planschnitteinrichtung und einer Weiterverarbeitungseinrichtung angeordnet ist, mit einem eine aus aufeinander folgenden Reihen bestehende Lage aufnehmenden Tisch, einer die Lage schrittweise vorschiebenden Vorschubeinrichtung, einer die jeweils vorderste Reihe der Lage von dieser abziehenden und an einen quer zur Abzieheinrichtung verlaufenden Queranschlag anlegenden Abzieheinrichtung und einer dem Queranschlag zugeordneten Räumeinrichtung zum Austragen der an den Queranschlag angelegten Reihe.

Bei den bekannten Anordnungen dieser Art besitzt die Abzieheinrichtung in zugeordnete Schlitze des bis zum quer zur Abzieheinrichtung verlaufenden Anschlag reichenden Tischs eingreifende Rollen bzw. Walzen, die mit umfangsseitigen Stacheln versehen sind, welche die Tischoberfläche überragen und zum Eingriff mit der Unterseite der jeweils abzuziehenden Reihe bringbar sind. Bei der Verarbeitung von empfindlichem Papier besteht die Gefahr, dass die untersten, zum Eingriff mit den Stacheln kommenden Blätter beschädigt werden. Bei vergleichsweise großer Nutzenbreite, das heißt großer Reihenbreite und damit großem Gewicht, besteht die Gefahr, dass die Stacheln durchrutschen, so dass sich keine zuverlässige Trennung der vordersten Reihe von der Lage und keine zuverlässige Anlage am Queranschlag ergeben. Bei vergleichsweise kleiner Nutzenbreite besteht die Gefahr des Umfallens. Ein weiterer Nachteil der bekannten Anordnung ist darin zu sehen, dass die Päckchen der in der Regel in mehrere nebeneinander liegende Päckchen unterteilten Reihe beim seitlichen Ausschieben über die Schlitze des Tischs hinweggehen müssen. Dabei besteht die Gefahr, dass sich die untersten Blätter in den Schlitzen verhängen können. Die vorstehend geschilderten Nachteile können somit zu nicht unbeträchtlichen Betriebsstörungen und Beschädigungen führen. Die bekannten Anordnungen eingangs erwähnter Art erweisen sich daher als nicht zuverlässig und schonend genug.

Die US-A 4 610 347 zeigt eine Vorrichtung zur Handhabung von Warenpäckchen mit einem eine aus aufeinanderfolgenden Päckchenreihen bestehende Päckchenlage aufnehmenden Tisch, einer die Lage vorschiebenden Vorschubeinrichtung, einer einen Teil der Päckchenreihen der Lage von dieser abziehenden Abzieheinrichtung und einer quer zur Vorschubrichtung arbeitenden Ausstoßeinrichtung. Die Abzieheinrichtung enthält eine hin- und hergehend bewegbare Platte, deren rückwärtiges Ende, das als ansteigende Rampe ausgebildet ist, zum Beladen an den Tisch annäherbar ist. Es verbleibt jedoch ein Spalt. Bei der Bearbeitung kleiner Warenpäckchen kann es daher zu Störungen kommen. Bei der Verarbeitung unterschiedlich großer Warenpäckchen ist ein unterschiedlicher Hub der hin- und hergehenden Platte erforderlich, um die Warenpäckchen in jedem Fall in eine gleiche Ausstoßposition zu bringen.

Der Erfindung liegt die Aufgabe zugrunde, eine Vorrichtung eingangs erwähnter Art mit einfachen und kostengünstigen Mitteln so zu verbessern, dass eine weitestgehend störungsfreie Betriebsweise und schonende Behandlung der Produkte gewährleistet sind.

Diese Aufgabe wird erfindungsgemäß dadurch gelöst, dass zwischen Tisch und Queranschlag eine Lücke vorgesehen ist, in der sich die Abzieheinrichtung befindet, die eine in und entgegen der Abziehrichtung bewegbare, aus einer vorderen koplanar zum Tisch geführten Abziehplatte und einer an diese mit Bewegungsfreiheitsgrad senkrecht zur Tischebene angehängten Nachläuferplatte bestehende Plattenanordnung aufweist, wobei die Abziehplatte den Anschlag unterfährt und in einer rückwärtigen Endstellung bündig an einen Tischvorsprung anschließt und wobei die Nachläuferplatte, auf der der Tischvorsprung aufliegt und die in ihrer rückwärtigen Endstellung unter den Tischvorsprung eingefahren ist, bei der Vorschubbewegung zumindest mit ihrem vorderen Rand von ihrem unteren, unter Tischniveau liegenden Niveau auf ein mit der Abziehplatte bündiges Niveau anhebbar ist und umgekehrt.

Mit diesen Maßnahmen lassen sich die eingangs geschilderten Nachteile der bekannten Anordnungen vollständig vermeiden. Da die Abziehplatte und die Nachläuferplatte in der vorderen Position bündig aneinander anschließen, ergibt sich in vorteilhafter Weise eine ebene Auflagefläche für die an den Anschlag angelegte Reihe, was auch bei der Verarbeitung von vergleichsweise schwierigem Material, wie welligem, mit einer Aluminiumbeschichtung versehenem Material etc., einen problemlosen Querausschub ermöglicht. Da die Abziehplatte in der rückwärtigen Endstellung bündig an den Tischvorsprung anschließt, ergibt sich dort ebenfalls eine ebene, glatte Auflagefläche, so dass die vorderste Reihe der Lage problemlos auf die Abziehplatte aufgeschoben werden kann. Ein weiterer, ganz besonderer Vorteil der erfindungsgemäßen Maßnahmen ist darin zu sehen, dass die Plattenanordnung unabhängig vom jeweils gerade verarbeiteten Format, das heißt unabhängig von der in Abziehrichtung gesehenen Reihenbreite, immer denselben Hub ausführen kann, so dass eine formatabhängige Einstellbarkeit nicht benötigt wird, was die Bauweise und die Bedienung vereinfacht.

Vorteilhafte Ausgestaltungen und zweckmäßige Fortbildungen der übergeordneten Maßnahmen sind in den Unteransprüchen angegeben und aus der nachstehenden Beispielsbeschreibung anhand der Zeichnung näher entnehmbar.

In der nachstehend beschriebenen Zeichnung zeigen:
- Figur 1: eine schematische Draufsicht auf einen erfindungsgemäßen Puffer einer Vorrichtung zur Herstellung von Etiketten,
- Figur 2: einen Längsschnitt durch die Abzieheinrichtung der Anordnung gemäß Figur 1,
- Figuren 3-5: mehrere Positionen der Abzieheinrichtung in Figur 2 entsprechender, schematisierter Darstellung und
- Figur 6: eine Seitenansicht einer der Nachläuferplatte der Abzieheinrichtung zugeordneten Kulissenführung.

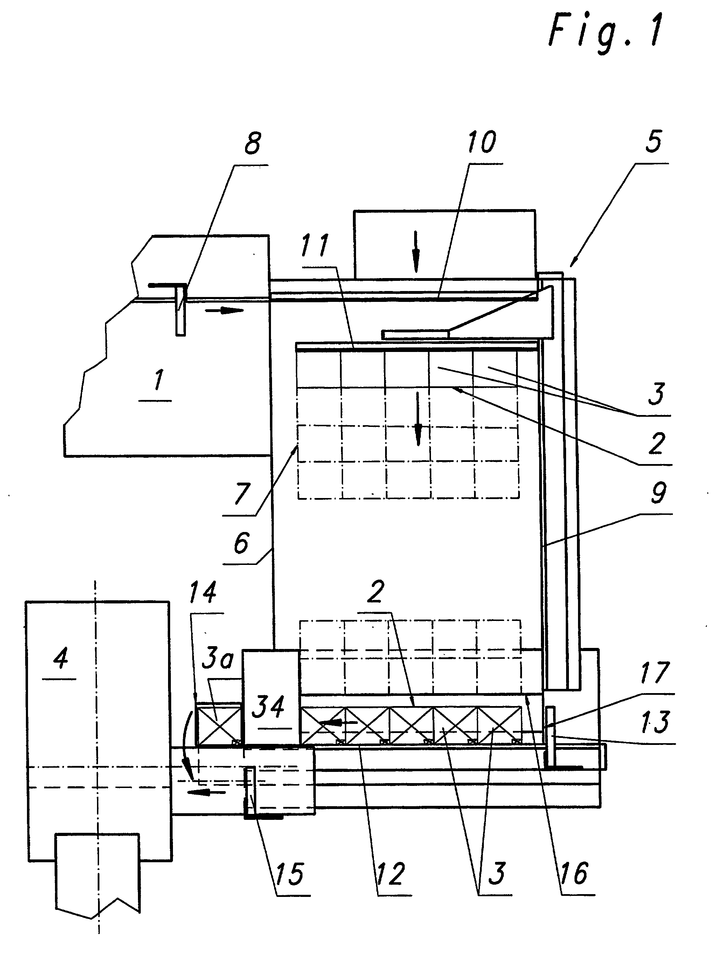

Bei der Herstellung von Etiketten werden in an sich bekannter Weise Pakete bedruckter Bogen auf einem in Figur 1 lediglich schematisch angedeuteten Planschneider 1 längs- und quergeschnitten, so dass sich Reihen 2 mit nebeneinander liegenden Nutzenpäckchen 3 ergeben, die nacheinander einer ebenfalls lediglich schematisch angedeuteten Stanze 4 zum Ausstanzen der Etiketten zugeführt werden. Zwischen dem Planschneider 1 und der Stanze 4 ist ein Puffer 5 mit einem Aufnahmetisch 6 vorgesehen, auf dem jeweils eine sogenannte Lage 7 aufnehmbar ist, die aus aufeinanderfolgenden Reihen 2 besteht.

Dem Planschneider ist eine Ausschubeinrichtung 8 zugeordnet, durch die jeweils eine Reihe 2 auf den Aufnahmetisch 6 ausschiebbar ist, wie in Figur 1 durch einen Pfeil angedeutet ist. Der Aufnahmetisch 6 ist mit einem quer zur Ausschubrichtung verlaufenden Seitenanschlag 9 versehen, der hier lediglich die belegbare Fläche des Aufnahmetischs 6 seitlich begrenzt. Die aus dem Planschneider 1 jeweils ausgeschobene Reihe wird durch einen dem Aufnahmetisch 6 zugeordneten, im Takt mit der Ausschubeinrichtung 8 arbeitenden Taktschieber 10 an das hintere Ende der auf dem Aufnahmetisch 6 jeweils aufgenommenen Lage 7 angestellt. Diese wird mittels eines zusätzlichen Lagenschiebers 11 schrittweise vorwärts bewegt. Die Vorschubrichtungen des Taktschiebers 10 und Lagenschiebers 11 sind in Figur 1 ebenfalls durch Pfeile angedeutet. Während der Tätigkeit des Taktschiebers 10 ist der Lagenschieber 11 weggeklappt. Die durch die Ausschubeinrichtung 8 ausgeschobenen Reihen 2 und damit auch die hieraus gebildete Lage 7 sind im dargestellten Beispiel bündig mit der in Ausschubrichtung hinteren Kante des Lagenschiebers 11 ausgerichtet. Es wäre aber auch eine Anlage am Seitenanschlag 9 denkbar.

Am vorderen Ende des Puffers 5 ist ein quer zur Vorschubrichtung verlaufender Queranschlag 12 vorgesehen, an dem jeweils eine von der Lage 7 abgezogene Reihe 2 anlegbar ist. Dem Queranschlag 12 ist ein parallel hierzu bewegbarer Reihenschieber 13 zugeordnet, durch den die jeweils angelegte Reihe 2 päckchenweise seitlich ausschiebbar ist, wie ebenfalls durch einen Pfeil angedeutet ist. Die ausgeschobenen Päckchen 3a werden der Stanze 4 zugeführt. Hierzu ist im dargestellten Beispiel eine Wippe 14 vorgesehen, die das jeweils ausgeschobene Päckchen 3a erfasst und in den Wirkbereich eines Überschiebers 15 bringt, der es der Stanze 4 zuführt, wie ebenfalls durch Pfeile angedeutet ist.

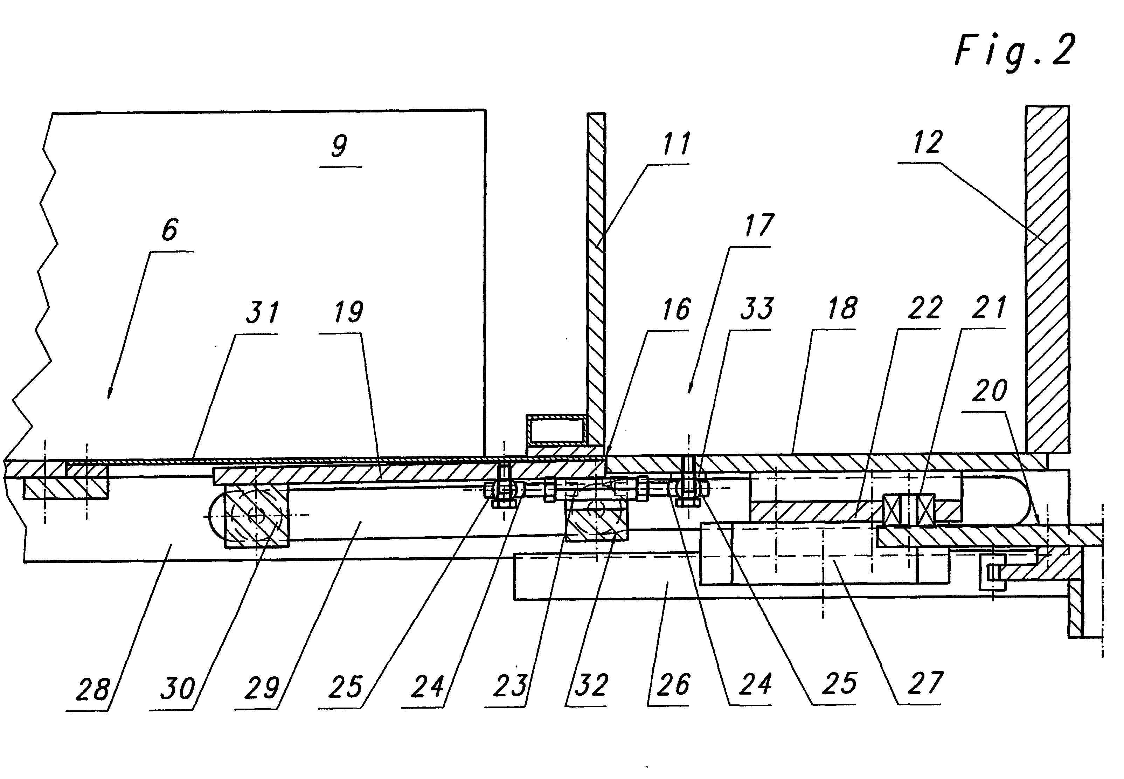

Der Queranschlag 12 ist von der Vorderkante 16 des Aufnahmetischs 6 beabstandet. Der so gebildeten Lücke ist eine Abzieheinrichtung 17 zugeordnet, welche die jeweils in ihren Wirkbereich gebrachte, vorderste Reihe 2 der Lage 7 von dieser abzieht und an den Queranschlag 12 anlegt. Der Aufbau und die Funktionsweise der Abzieheinrichtung 17 wird nachstehend anhand der Figuren 2 bis 6 näher erläutert.

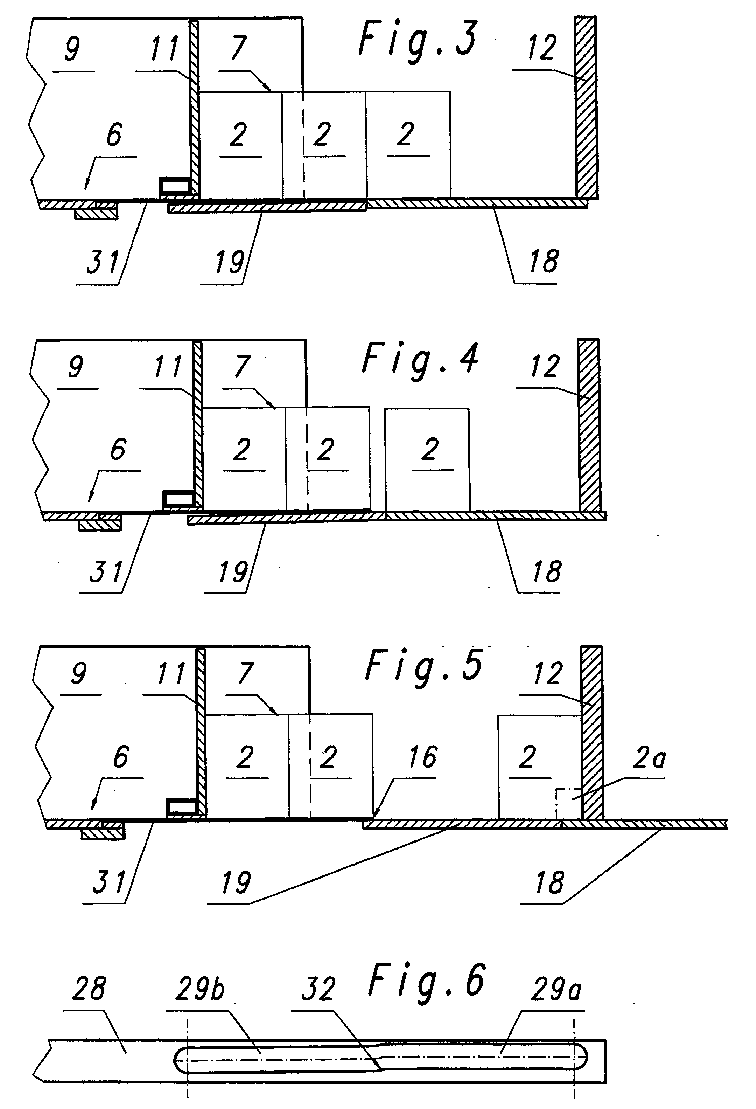

Die Abzieheinrichtung 17 besteht, wie aus Figur 2 entnehmbar ist, aus einer vorderen Abziehplatte 18 und einer an diese angehängten Nachläuferplatte 19. Diese Plattenanordnung überbrückt in jeder Betriebsstellung die Lücke zwischen dem vorderen Ende 16 des Aufnahmetischs 6 und dem Queranschlag 12. Die genannte Plattenanordnung ist mit konstantem Hub in Vorschubrichtung hin- und herbewegbar, wie in den Figuren 3 bis 5 angedeutet ist.

Hierzu greift an der Abziehplatte 18 eine Antriebseinrichtung 20 an, die einen konstanten Hub bewerkstelligt. Im dargestellten Ausführungsbeispiel ist die Antriebseinrichtung 20, wie Figur 2 zeigt, als Kurbeltrieb ausgebildet, der mit einem Kurbelzapfen 21 in einen an der Unterseite der Abziehplatte 18 befestigten Steg 22 eingreift.

Die Abziehplatte 18 und die Nachläuferplatte 19 sind, wie Figur 2 weiter zeigt, über wenigstens eine, vorzugsweise mehrere, über die Plattenbreite verteilte, die Stoßfuge der Plattenanordnung überbrückende, an die beiden Platten angelenkte Stange bzw. Stangen 23 aneinander angehängt. Die Anlenkungen sind als Kugelgelenke ausgebildet. Hierzu ist die Stange 23 an ihren Enden mit Kalotten 24 versehen, die im Eingriff mit an der Unterseite der Abziehplatte 18 bzw. Nachäuferplatte 19 angebrachten Kugelköpfen 25 sind. Die Stange 23 besteht aus einem als Gewindehülse ausgebildeten Mittelteil, in welches die Kalotten 24 tragende Gewindestifte einschraubbar sind, so dass die Länge exakt einstellbar ist. Hierdurch wird erreicht, dass die beiden Platten exakt aneinander anstellbar sind. Die gegenseitige Anlenkung ermöglicht gegenseitige Verschiebungen der Platten senkrecht zur Plattenebene, worauf weiter unten noch näher eingegangen wird.

Die Abziehplatte 18 und die Nachläuferplatte 19 sind auf jeweils zugeordneten Führungen 26 bzw. 28 geführt. Die der Abziehplatte 18 zugeordnete Führung 26 verläuft parallel zur Ladeoberfläche des Aufnahmetischs 6 und ist so angeordnet, dass die Oberseite der Abziehplatte 18 stets koplanar mit der Tischebene ist. Zur Bildung der tischparallelen Führungen 26 der Abziehplatte 18 können einfache Schienen vorgesehen sein, auf denen im Bereich der Unterseite der Abziehplatte 18, hier am Steg 22, angebrachte Lauforgane 27, die hier als auf die zugeordneten Schienen aufsetzbare, im Querschnitt U-förmige Reiter ausgebildet sind, laufen. Die Führungen 26 können am mit dem Tisch 6 verbundenen Unterbau des Queranschlags 12 befestigt sein.

Die der Nachläuferplatte 19 zugeordneten Führungen 28 sind als Kulissenführung ausgebildet. Hierzu sind mit jeweils einer Führungsnut 29 versehene Führungsschienen vorgesehen. Diese können mit ihrem rückwärtigen Ende am Gestell des Aufnahmetisches 6 befestigt sein. In den Führungsnuten 29 laufen an der Unterseite der Nachläuferplatte 19 angebrachte, als Rollen ausgebildete Lauforgane 30.

Der Aufnahmetisch 6 ist mit einem in Richtung Queranschlag 12 auskragenden, durch ein dünnes Federblech gebildeten Tischvorsprung 31 versehen. Dieser liegt mit seinem vorderen Bereich auf der Nachläuferplatte 19 auf. An die durch die Vorderkante des Tischvorsprungs 31 gebildete, vordere Tischkante 16 ist die Abziehplatte 18 in der den Figuren 2 und 3 zugrundeliegenden, rückwärtigen Endstellung angestellt, wobei sich infolge der koplanaren Anordnung von Aufnahmetisch 6 und Abziehplatte 18 ein bündiger Übergang ergibt. Die Nachläuferplatte 19 ist in der rückwärtigen Endstellung ganz unter den Tischvorsprung 31 eingeschoben. Hierzu kann die Nachläuferplatte 19 gegenüber der Abziehplatte 18 nach unten abtauchen.

Im Verlauf der Vorschubbewegung der aus Abziehplatte 18 und Nachläuferplatte 19 bestehenden Plattenanordnung wird der vordere Rand der Nachläuferplatte 19, wie aus den Figuren 4 und 5 entnehmbar ist, auf das Niveau der Abziehplatte 18 angehoben, wodurch sich ein bündiger Übergang zwischen Abziehplatte 18 und Nachläuferplatte 19 ergibt. Hierzu besitzen die Führungsnuten 29 der der Nachläuferplatte 19 zugeordneten Kulissenführung wie aus Figur 6 erkennbar ist, zwei aneinander anschließende Abschnitte 29a,b, die durch einen Kurvenbereich 32 miteinander verbunden sind, der eine der Dicke des den Tischvorsprung 31 bildenden Blechs entsprechende Höhendifferenz überbrückt. Der vordere Abschnitt 29a verläuft parallel zur Ladeoberfläche des Aufnahmetischs 6 und ist so angeordnet, dass die hiermit zum Eingriff kommenden Lauforgane 30 die Nachläuferplatte 19 im Verlauf der Vorschubbewegung auf ein zur Ladeoberfläche des Aufnahmetischs 6 koplanares Niveau anheben.

Der hintere Abschnitt 29b ist mit Gefälle nach hinten angeordnet, so dass die unter den Tischvorsprung 31 einfahrbare Nachläuferplatte 19 mit dem Tischvorsprung nicht in Flächenkontakt kommt, wie die Figuren 2 und 3 anschaulich erkennen lassen. Sobald die vorderen Lauforgane 30 der Nachläuferplatte 19 den Steigungsbereich 32 überfahren, wird der vordere Bereich der Nachläuferplatte 19 angehoben bzw. abgesenkt, was aufgrund des durch die Anlenkung der Nachläuferplatte 19 an der Abziehplatte 18 gegebenen Bewegungsfreiheitsgrad senkrecht zur Plattenebene möglich ist. Sobald die hinteren Lauforgane 30 der Nachläuferplatte 19 den Steigungsbereich 32 überfahren, wird auch der hintere Bereich der Nachläuferplatte 19 entsprechend angehoben bzw. abgesenkt. In der vorderen Endstellung sind die Abziehplatte 18 und die Nachläuferplatte 19, wie aus Figur 5 entnehmbar ist, koplanar zueinander und dementsprechend auch koplanar zur Tischoberseite des Ladetisches 7 ausgerichtet. Aufgrund des Anstiegs der Nachläuferplatte 19 wird der Tischvorsprung 31 um seine Dicke nach oben ausgelenkt, was das den Tischvorsprung 31 bildende dünne Federblech ohne weiteres ermöglicht.

Die vorderen Lauforgane 30 der Nachläuferplatte 19 sind, wie aus Figur 2 anschaulich entnehmbar ist, so angeordnet, dass sie in der hinteren Endstellung der Plattenanordnung gerade am unteren Ende des Kurvenbereichs 32 positioniert sind. Hierdurch wird erreicht, dass der vordere Bereich der Nachläuferplatte 19 bereits beim Beginn der Vorschubbewegung angehoben wird und umgekehrt.

Der Hub der Antriebseinrichtung 20 ist kleiner als die in Transportrichtung gesehene Breite der Nachläuferplatte 19, so dass der Tischvorsprung 31 auch in der vorderen Endstellung der Plattenanordnung noch zuverlässig auf dem hinteren Bereich der Nachläuferplatte 19 aufliegt, wie Figur 5 zeigt. Andererseits ist der Hub der Antriebseinrichtung 20 größer als die Differenz zwischen dem Abstand der vorderen Tischkante 16 vom Queranschlag 12 und der in Figur 5 bei 2a angedeuteten, dem kleinsten Format zugeordneten, in Transportrichtung gesehenen Reihenbreite. Hierdurch wird erreicht, dass auch Reihen mit der kleinsten Formatbreite zuverlässig am von der Abziehplatte 18 untergriffenen Queranschlag 12 angelegt werden können.

Um die vorderste Reihe 2 der Lage 7 von dieser abzutrennen und an den Queranschlag 12 anzulegen wird die die Abzieheinrichtung 17 bildende Plattenanordnung in die den Figuren 2 und 3 zugrundeliegende, rückwärtige Endstellung gebracht. In dieser schließt die Abziehplatte 18 bündig an den Tischvorsprung an. Die Nachläuferplatte 19 ist unter dem Tischvorsprung versenkt. Das vordere Ende der Abziehplatte reicht dabei gerade noch unter den Queranschlag 12. Die in Transportrichtung gesehene Breite der Abziehplatte 18 ist dementsprechend größer als die Lücke zwischen der vorderen Tischkante 16 und dem Queranschlag 12.

Sobald sich die genannte Plattenanordnung in der rückwärtigen Endstellung befindet, kann die auf dem Aufnahmetisch 6 aufgenommene Lage 7 durch den zugeordneten Lagenschieber 11 soweit vorgeschoben werden, dass die vorderste Reihe 2, wie in Figur 3 gezeichnet, ganz, oder wenigstens mit ihrem Schwerpunkt auf die bündig an den Tischvorsprung 31 anschließende Abziehplatte gelangt. Diese Situation liegt der Figur 3 zugrunde. Infolge der Bündigkeit zwischen Abziehplatte 18 und Tischvorsprung 31 ist das Aufschieben der vordersten Reihe 2 auf die Abziehplatte 18 problemlos möglich.

Anschließend beginnt die Vorwärtsbewegung der Abziehplatte 18 und der hieran angehängten Nachläuferplatte 19. Dabei wird die von der Abziehplatte 18 mitgenommene, vorderste Reihe 2 zuverlässig von der Lage 7 abgetrennt, wie Figur 4 erkennen lässt. Gleichzeitig taucht die Nachläuferplatte 19 unter dem Tischvorsprung 31 hervor, wobei die vordere Kante der Nachläuferplatte 19 infolge des durch den Steigungsbereich 32 bewirkten Anstiegs in bündigen Anschluss an die Abziehplatte 18 gelangt, wie Figur 4 anschaulich zeigt.

Im Verlauf der weiteren Vorwärtsbewegung der Plattenanordnung gelangt die auf der Abziehplatte 18 aufgenommene Reihe 2 zur Anlage am Queranschlag 12.

Unabhängig davon vollführt die Plattenanordnung ihren ganzen Hub, so dass auch bei der Verarbeitung des kleinsten Formats 2a eine zuverlässige Anlage am Queranschlag 12 erreicht wird. Die am Queranschlag anliegende Reihe 2 wird dabei von der Nachläuferplatte 19 teilweise unterfahren, was infolge der dabei gegebenen Bündigkeit zwischen der Abziehplatte 18 und der Nachläuferplatte 19 problemlos möglich ist. Anschließend kann die an den Queranschlag 12 angelegte Reihe 2 mittels des Reihenschiebers 13 seitlich ausgeschoben werden.

Der Reihenschieber 13 ist soweit seitwärts bewegbar, dass das letzte Päckchen 3a in die Wippe 14 eingeschoben wird, wie aus Figur 1 entnehmbar ist. Anschließend wird der Reihenschieber 13 wieder in die in Figur 1 gezeigte Ausgangsposition zurückgefahren. Dabei wird ein der Wippe 14 vorgeordnetes, noch außerhalb des wippenseitigen Rands der Lage 7 liegendes Feld 34 geräumt. Diese Feld 34 kann mittels einer vorzugsweise berührungslosen Abtasteinrichtung abgetastet werden. Sobald das Feld 34 frei ist, kann ein weiterer Anlegevorgang eingeleitet werden. Hierzu wird die Abzieheinrichtung 17 von der der Figur 5 zugrundeliegenden, vorderen Endstellung in die den Figuren 2 und 3 zugrundeliegende, rückwärtige Endstellung zurückgefahren, wobei die oben geschilderten Bewegungsabläufe umgekehrt erfolgen, das heißt wobei die Nachläuferplatte 19 von dem mit dem Auflagetisch 6 koplanaren Niveau unter den Tischvorsprung 31 abgesenkt wird.

Die in der rückwärtigen Endstellung sich ergebende Stufe zwischen Abziehplatte 18 und Nachläuferplatte 19 kann durch den abziehplattenseitigen Kugelköpfen 25 zugeordnete Beilagscheiben 33 ausgeglichen werden. Auf diese Weise wird erreicht, dass die Stange 23 in der rückwärtigen Endstellung plattenparallel verläuft. Im Verlauf der Vorschubbewegung wird die Stange 23 nachläuferplattenseitig nach oben gekippt, was der Bildung eines Spalts zwischen Abziehplatte 18 und Nachläuferplatte 19 entgegenwirkt.

## Patentansprüche

1. Vorrichtung zur Handhabung von Planschnittprodukten, insbesondere Puffer, der zwischen einer Planschnitteinrichtung (1) und einer Weiterverarbeitungseinrichtung (4) angeordnet ist, mit einem eine aus aufeinanderfolgenden Reihen (2) bestehende Lage (7) aufnehmenden Tisch (6), einer die Lage (7) schrittweise vorschiebenden Vorschubeinrichtung (10,11), einer die jeweils vorderste Reihe (2) der Lage (7) von dieser abziehenden und an einen quer zur Abziehrichtung verlaufenden Queranschlag (12) anlegenden Abzieheinrichtung (17) und einer dem Queranschlag (12) zugeordneten Räumeinrichtung (13) zum Austragen der an den Queranschlag angelegten Reihe (2), **dadurch gekennzeichnet, dass** zwischen dem Tisch (6) und dem Queranschlag (12) eine Lücke vorgesehen ist, in welcher sich die Abzieheinrichtung (17) befindet, die eine in und entgegen der Abziehrichtung bewegbare, aus einer vorderen, zum Tisch (6) koplanaren Abziehplatte (18) und einer an diese mit Bewegungsfreiheitsgrad senkrecht zur Tischebene angehängten Nachläuferplatte (19) bestehende Plattenanordnung aufweist, wobei die Abziehplatte (18) den Queranschlag (12) unterfährt und in der rückwärtigen Endstellung bündig an einen Tischvorsprung (31) anschließt und wobei die Nachläuferplatte (19), auf welcher der Tischvorsprung (31) aufliegt und die in der rückwärtigen Endstellung unter den Tischvorsprung (31) eingefahren ist, bei der Vorschubbewegung der Plattenanordnung zumindest mit ihrem vorderen Rand von ihrem unter Tischniveau liegenden Niveau auf ein mit der Abziehplatte (18) bündiges Niveau anhebbar ist und umgekehrt.

2. Vorrichtung nach Anspruch 1, **dadurch gekennzeichnet, dass** die Abziehplatte (18) und Nachläuferplatte (19) mit im Bereich ihrer Unterseite vorgesehenen Lauforganen (27) bzw. (30) versehen sind, die im Eingriff mit zugeordneten Führungen (26) bzw. (28) sind, wobei die der Nachläuferplatte (19) zugeordneten Führungen (28) als mit einem Kurvenbereich (32) versehene Kulissenführung ausgebildet sind.

3. Vorrichtung nach Anspruch 2, **dadurch gekennzeichnet, dass** die der Nachläuferplatte (19) zugeordnete Kulissenführung einen vorderen, tischparallelen Abschnitt (29a) und einen über den Kurvenbereich (32) hieran anschließenden, hinteren Abschnitt (29b) aufweist, der mit Gefälle zum hinteren Ende hin verläuft, wobei der Kurvenbereich (32) eine der Dicke des Tischvorsprungs (31) entsprechende Höhendifferenz überbrückt und die vorderen Lauforgane (30) der Nachläuferplatte (19) in der rückwärtigen Endstellung zumindest bis zum unteren Ende des Kurvenbereichs (32) gelangen.

4. Vorrichtung nach einem der vorhergehenden Ansprüche 2 oder 3, **dadurch gekennzeichnet, dass** die vorzugsweise als Rollen ausgebildeten Lauforgane (30) der Nachläuferplatte (19) in eine die Kulissenführung bildende Führungsnut (29) mit den über den Kurvenbereich (32) aneinander anschließenden Abschnitten (29a,b) eingreifen.

5. Vorrichtung nach einem der vorhergehenden Ansprüche 2 bis 4, **dadurch gekennzeichnet, dass** die Lauforgane (27) der Abziehplatte (18) als die jeweils zugeordnete, vorzugsweise als Schiene ausgebildete, tischparallele Führung (26) U-förmig umfassende Reiter ausgebildet sind.

6. Vorrichtung nach einem der vorhergehenden Ansprüche, **dadurch gekennzeichnet, dass** der Tischvorsprung (31) als dünnes Federblech ausgebildet ist

7. Vorrichtung nach einem der vorhergehenden Ansprüche, **dadurch gekennzeichnet, dass** der Hub der aus Abziehplatte (18) und Nachläuferplatte (19) bestehenden Plattenanordnung konstant, vorzugsweise kleiner als die in Abziehrichtung gesehene Breite der Nachläuferplatte (19) und größer als die Differenz zwischen dem Abstand des Queranschlags (12) von der vorderen Tischkante (16) und der dem kleinsten Format (2a) zugeordneten Reihenbreite ist.

8. Vorrichtung nach einem der vorhergehenden Ansprüche, **dadurch gekennzeichnet, dass** die Vorschubeinrichtung einen der Lage (7) zugeordneten Lagenschieber (11) aufweist, der bis zur rückwärtigen Tischkante (16) bewegbar ist.

9. Vorrichtung nach einem der vorhergehenden Ansprüche, **dadurch gekennzeichnet, dass** die Abziehplatte (18) mit einer vorzugsweise als Kurbeltrieb ausgebildeten Antriebseinrichtung (20) verbunden ist.

10. Vorrichtung nach einem der vorhergehenden Ansprüche, **dadurch gekennzeichnet, dass** die Abziehplatte (18) und die Nachläuferplatte (19) mittels wenigstens einer die Stoßfuge überbrückenden Stange (23), deren Länge vorzugsweise einstellbar ist, aneinander angehängt sind, die mit ihren Enden an beide Platten angelenkt ist, wobei die Stange (23) an ihren Enden mit Kugelkalotten (24) versehen ist, die im Eingriff mit an der Unterseite von Abziehplatte (18) bzw. Nachläuferplatte (19) angebrachten Kugelköpfen (25) sind und wobei jede abziehplattenseitige Kugelanordnung mittels eines Distanzelements (33), dessen Dicke der Dicke des Tischvorsprungs (31) entspricht, so positioniert ist, dass die Stange (23) in der rückwärtigen Endstellung tischparallel ist.

## Claims

1. A device for handling blanks, especially a buffer arranged between a blank cutting device (1) and a device (4) for further processing, comprising a table (6) holding a layer (7) consisting of successive rows (2), an advancing device (10, 11) advancing the layer (7) in a step-wise manner, a draw-off device (17) for drawing off each leading row (2) of the layer (7) and putting it against a crossfeed stop (12) extending transversely to the drawing-off direction, and a clearing device (13) associated to the crossfeed stop for carrying out the row (2) put against the crossfeed stop,
**characterized in that**
a gap is provided between the table (6) and the crossfeed stop (12) in which the draw-off device (17) is arranged comprising a plate arrangement movable in and against the drawing-off direction, said plate arrangement consisting of a leading draw-off plate (18) coplanar with the table and a trailing plate (19) suspended to said draw-off plate with a degree of freedom of motion perpendicular to the plane of the table, the draw-off plate (18) running below the crossfeed stop (12) and flushing with a table projection (31) in the backward end position, and the trailing plate (19) supporting the table projection (31) and being pushed in the backward end position below the table projection (31), is liftable during the advance movement of the plate arrangement at least with its leading edge from its level below the table level to a level flushing with the draw-off plate (18) and vice versa.

2. A device according to claim 1, **characterized in that** the draw-off plate (18) and the trailing plate (19) are provided with running elements (27) and (30), resp., in the area of their bottom side engaging with associated guidances (26) and (28), resp., the guidances (28) associated to the trailing plate (19) are formed as a crank guidance provided with a curved area (32).

3. A device according to claim 2, **characterized in that** the crank guidance associated to the trailing plate (19) comprises a leading portion (29a) parallel to the table and a rear portion (29b) joining it via the curved area (32) and extending with a downward slope to the rear end, the curved area (32) bridging a height difference corresponding to the thickness of the table projection (31) and the leading running elements (30) of the trailing plate (19) reaching in the rearward end position at least the lower end of the curved area (32).

4. A device according to one of the preceding claims 2 or 3, **characterized in that** the running elements (30) of the trailing plate (19), preferably formed as rollers, engage with a guiding groove (29) forming the crank guidance with the portions (29a, b) joining each other via the curved area (32).

5. A device according to one of the.preceding claims 2 to 4, **characterized in that** the running elements (27) of the draw-off plate (18) are formed as slides gripping in an U-shaped manner over the associated guidance (26), preferably formed as a rail and being parallel to the table.

6. A device according to one of the preceding claims, **characterized in that** the table projection (31) is formed as a thin spring steel sheet.

7. A device according to one of the preceding claims, **characterized in that** the lifting of the plate arrangement consisting of the draw-off plate (18) and the trailing plate (19) is constant, preferably smaller than the width of the trailing plate (19) seen in the withdrawing direction and larger than the difference between the distance of the crossfeed stop (12) from the leading table edge (16) and the width of the row associated to the smallest format (2a).

8. A device according to one of the preceding claims, **characterized in that** the advancing device comprises a layer pushing element (11) associated to the layer (7) and being movable to the rearward edge (16) of the table.

9. A device according to one of the preceding claims, **characterized in that** the draw-off plate (18) is connected with a driving device (20) preferably formed as a crank drive.

10. A device according to one of the preceding claims, **characterized in that** the draw-off plate (18) and the trailing plate (19) are joined by means of a rod (23) bridging at least the gap of the joint, the length of the rod is preferably adjustable and the ends of it are linked with said two plates, said rod (23) is provided at its ends with calotte shells (24) engaging with spherical heads located at the bottom side of the draw-off plate (18) and trailing plate (19), resp., each draw-off plate-sided spherical arrangement is positioned by means of a distance element (33), the thickness of which corresponds to the thickness of the table projection (31), in such a way that the rod (23) is parallel to the table in the rearward end position.

## Revendications

1. Dispositif de manutention de produits en feuilles, en particulier tampon qui est disposé entre un dispositif à couper des produits en feuilles (1) et un dispositif de traitement ultérieur (4), avec une table (6) recevant une couche (7) se composant de rangées successives (2), avec un dispositif d'avancement (10,11) qui avance pas, à pas la couche (7), avec un dispositif de détachage (17) qui détache de la couche (7) respectivement la première rangée (2) de celle-ci et l'appuie contre une butée transversale (12) s'étendant transversalement à la direction de détachage, et avec un dispositif d'évacuation (13) qui est associé à la butée transversale (12) et destinée à transporter dehors la rangée (2) appuyée contre la butée transversale, **caractérisé par le fait que** l'on prévoit entre la table (6) et la butée transversale (12) une lacune dans laquelle se trouve le dispositif de détachage (17) lequel présente une disposition de plaques qui peut être déplacée dans et contre la direction de détachage et qui se compose d'une plaque avant de détachage (18) coplanaire à la table (6) et d'une plaque suiveuse (19) attelée à cette première avec un degré de liberté de mouvement vertical au plan de table, la plaque de détachage (18) passant au-dessous de la butée transversale (12) et étant, dans la position terminale arrière, contiguë à fleur à une saillie de table (31), et la plaque suiveuse (19) contre laquelle s'appuie la saillie de table (31) et qui, dans la position terminale arrière, est rentrée sous la saillie de table (31) pouvant, lors du mouvement d'avance de la disposition,de plaques, être soulevée au moins avec son bord avant de manière à passer de son niveau situé sous le niveau de table à un niveau affleuré avec la plaque de détachage (18), et vice versa.

2. Dispositif selon la revendication 1, **caractérisé par le fait que** la plaque de détachage (18) et la plaque suiveuse (19) sont pourvues d'organes de roulement (27) ou bien (30) prévus dans la zone de leur face inférieure qui sont en prise avec des guides associés (26) ou bien (28), les guides (28) associés à la plaque suiveuse (19) étant réalisés en tant que guide de coulisse pourvu d'une zone courbe (32).

3. Dispositif selon la revendication 2, **caractérisé par le fait que** le guide de coulisse associé à la plaque suiveuse (19) présente un tronçon avant (29a) parallèle à la table et un tronçon arrière (29b) contigu à cela par la zone courbe (32), ce dernier s'étendant avec une pente vers l'extrémité arrière, la zone courbe (32) pontant une différence de hauteur correspondant à l'épaisseur de la saille de table (31), et les organes avant de roulement (30) de la plaque suiveuse (19) atteignant, dans la position terminale arrière, au moins jusqu'au bout inférieur de la zone courbe (32).

4. Dispositif selon l'une des revendications précédentes 2 ou 3, **caractérisé par le fait que** les organes de roulement (30) de la plaque suiveuse (19), qui sont réalisés de préférence en tant que rouleaux se prennent dans une rainure de guidage (29) formant le guide de coulisse, avec les tronçons (29a, b) contigus l'un à l'autre par la zone courbe (32).

5. Dispositif selon l'une des revendications précédentes 2 à 4, **caractérisé par le fait que** les organes de roulement (27) de la plaque de détachage (18) sont réalisés comme cavaliers embrassant en U le guide (26) respectivement associé qui est parallèle à la table et réalisé de préférence en tant que rail.

6. Dispositif selon l'une des revendications précédentes, **caractérisé par le fait que** la saillie de table (31) est réalisée en tant que mince tôle faisant ressort.

7. Dispositif selon l'une des revendications précédentes, **caractérisé par le fait que** la course de la disposition de plaques se composant de la plaque de détachage (18) et de la plaque suiveuse (19) est constante, de préférence plus petite que la largeur de la plaque suiveuse (19), vue dans la direction de détachage, et plus grande que la différence entre la distance de la butée transversale (12) par rapport au bord avant de table (16) et la largeur de rangée associée au format le plus petit (2a).

8. Dispositif selon l'une des revendications précédentes, **caractérisé par le fait que** le dispositif d'avancement présente un dispositif à pousser la couche (11) qui est associé à la couche (7) et qui peut être déplacé jusqu'au bord arrière de table (16).

9. Dispositif selon l'une des revendications précédentes, **caractérisé par le fait que** la plaque de détachage (18) est reliée à un dispositif d'entraînement (20) réalisé de préférence en tant que commande à bielle.

10. Dispositif selon l'une des revendications précédentes, **caractérisé par le fait que** la plaque de détachage (18) et la plaque suiveuse (19) sont attelées l'une à l'autre par l'intermédiaire d'au moins une barre (23) qui ponte le joint d'about et dont la longueur est de préférence réglable, ladite barre étant articulée avec ses extrémités sur les deux plaques, la barre (23) étant pourvue à ses extrémités de calottes sphériques (24) qui sont en prise avec de têtes sphériques (25) montées sur la face inférieure de la plaque de détachage (18) ou bien de la plaque suiveuse (19), et chaque disposition sphérique située du côté de la plaque de détachage étant positionnée au moyen d'un élément d'écartement (33) dont l'épaisseur correspond à l'épaisseur de la saillie de table (31), de telle manière que, dans la position terminale arrière, la barre (23) est parallèle à la table.
